# EUROPEAN PATENT APPLICATION

(11) **EP 0 754 493 A2**
(43) Date of publication of application: **22.01.1997**
(21) Application number: 96111621.7
(22) Date of filing: 18.07.1996
(51) Int. Cl.: B01J 23/38

(54) **Catalyst for purifying exhaust gases and process for producing the same**

(30) Priority: 21.07.1995 JP 185644/95
(71) Applicant: TOYOTA JIDOSHA KABUSHIKI KAISHA, Aichi-ken 471 (JP); KABUSHIKI KAISHA TOYOTA CHUO KENKYUSHO, Aichi-gun Aichi-ken, 480-11 (JP); CATALER INDUSTRIAL CO., LTD., Ogasa-gun, Shizuoka-ken (JP)
(72) Inventor: Sato, Akemi, Toyota-shi, Aichi-ken (JP); Nagami, Tetsuo, Toyota-shi, Aichi-ken (JP); Watanabe, Yoshihide, K.K. Toyota Chuo Kenkyusho, Aichi-gun, Aichi-ken (JP); Banno, Kouji, c/o K.K. Toyota Chuo Kenkyusho, Aichi-gun, Aichi-ken (JP); Kasahara, Koichi, Daito-cho, Ogasa-gun, Shizuoka-ken (JP); Aono, Norihiko, Daito-cho, Ogasa-gun, Shizuoka-ken (JP)
(74) Representative: KUHNEN, WACKER & PARTNER

(57) **Abstract**

A catalyst for purifying exhaust gases includes an amorphous double-chained-structure type clay mineral with a transition metal element substituted for a constituent of the clay mineral, Mg and/or Al, a co-catalyst loaded on the clay mineral, and a noble metal element loaded thereon. The magnesium and/or aluminum are partially substituted by a transition metal element. The co-catalytic element is at least one element selected from the group consisting of rare-earth elements, alkali metal elements, and alkaline-earth metal elements. The catalyst can readily oxidize and decompose HC at low temperatures, and can inhibit the generation of sulfates, stemming from the magnesium and/or aluminum, at elevated temperatures.

## Description

### BACKGROUND OF THE INVENTION

### Field of the Invention

The present invention relates to a catalyst for purifying exhaust gases which can oxidize and decompose hydrocarbons (HC), carbon monoxide (CO) and soluble organic fractions (hereinafter referred to as "SOF") at low temperatures, and which can inhibit sulfur dioxide (SO₂) from turning into sulfuric acid at high temperatures so as to reduce the emission of particulate matters (hereinafter simply referred to as "PM"). HC, CO, "SOF", and SO₂ are, for instance, included in exhaust gases which are emitted from internal combustion engines (e.g., diesel engines). The present invention also relates to a process for producing such a catalyst for purifying exhaust gases.

### Description of the Related Art

An oxidizing catalyst for oxidizing HC and CO included in exhaust gases usually comprises a porous support, and a noble metal element loaded on the porous support. As for the porous support, inorganic porous supports are employed usually. For example, Japanese Unexamined Patent Publication (KOKAI) No. 62-201,648 discloses to use alumina, silica, titania, and alumina-silica as the inorganic porous support. Japanese Unexamined Patent Publication (KOKAI) No. 55-147,153 and Japanese Unexamined Patent Publication (KOKAI) No. 64-4,220 propose to employ type "A" zeolite, type "X" zeolite, mordenite-based zeolite, and crystalline zeolite as the inorganic porous support.

However, internal combustion engines have been improved in terms of performance recently, and accordingly emit exhaust gases whose temperature is elevated sharply. As a result, the conventional catalyst for purifying exhaust gases comprising the inorganic porous support cannot fully oxidize HO and CO included in such exhaust gases which are emitted from the improved internal combustion engine. Thus, a catalyst for purifying exhaust gases with a higher oxidizing activity has been longed for.

Japanese Unexamined Patent Publication (KOKAI) No.4-363,138 discloses an oxidizing catalyst. This oxidizing catalyst comprises a support including a double-chained-structure type clay mineral, and Pt and/or Pd loaded on the support. The double-chained-structure type clay mineral is turned into amorphous partially at least, and its constituent elements, such as Mg and/or Al, are replaced by a transition metal element in an amount of 10% by weight or less with respect to a total weight of the constituent Mg and/or Al.

In the oxidizing catalyst disclosed in Japanese Unexamined Patent Publication (KOKAI) No.4-363,138, Pt and/or Pd are loaded on the support by way of the hydroxide groups existing on the asymmetric surfaces of the substituted double-chained-structure type clay mineral, and are dispersed thereon nearly in a state of atoms. The oxidizing catalyst exhibits a better low-temperature activity than the conventional catalysts for purifying exhaust gases in which Pt is loaded on silica or alumina.

However, when the oxidizing catalyst disclosed in Japanese Unexamined Patent Publication (KOKAI) No.4-363,138 is used to purify the exhaust gases emitted, for example, from diesel engines, it exhibits an inadequate HC oxidizing activity at low temperatures, and generates sulfates to adversely increase the emission of "PM" at high temperatures.

Japanese Unexamined Patent Publication (KOKAI) No.7-75,738 discloses an oxidizing catalyst which overcomes the problems to some extent. This oxidizing catalyst is produced by the following order of steps; namely: a double-chained-structure type clay mineral is prepared, double-chained-structure type clay mineral which is turned into amorphous partially at least; the constituent elements, such as Mg and/or Al, of the double-chained-structure type clay mineral are replaced by iron ions in an amount of 10% by weight or less with respect to a total weight of the constituent Mg and/or Al; and the resulting substituted double-chained-structure type clay mineral is subjected to a heat treatment in a temperature range of from 500 to 900 °C. In the resulting oxidizing catalyst, the iron ions are stabilized by the heat treatment after the substitution. At the same time, the SO₂ adsorption cites, such as the OH groups, are decreased to reduce the adsorption of SO₂ and SO₃, and accordingly SO₂ is inhibited from oxidizing and is emitted as it is. Thus, the oxidizing catalyst reduces the emission of "PM".

However, even the oxidizing catalyst disclosed in Japanese Unexamined Patent Publication (KOKAI) No.7-75,738 still adsorbs SO₂ and SO₃ in a large amount, and inadequately inhibits the sulfates from generating. Therefore, a further improvement has been longed for inhibiting the sulfates from generating.

### SUMMARY OF THE INVENTION

The present invention has been developed in view of the circumstances described above. It is an object of the present invention to provide a catalyst for purifying exhaust gases which can oxidize and decompose HC and CO included in exhaust gases even at low temperatures, and can inhibit the sulfates from generating even at high temperatures so as to reduce the emission of "PM". The exhaust gas is emitted from diesel engines, for example.

The first aspect of the present invention can carry out the aforementioned object. According to the first aspect, an exhaust catalyst for purifying exhaust gases comprises:
a carrier of a modified clay mineral;
a catalyst of a noble metal element loaded on the carrier; and
a co-catalyst loaded on the carrier together with the catalyst, the co-catalyst being at least one element selected from the group consisting of rare-earth elements, alkali metal elements, and alkaline-earth metal elements;
the modified clay mineral comprising:
   a double-chained-structure type clay mineral comprising Mg and/or Al;
   an amorphous structure transformed from at least a part of the double-chained-structure type clay mineral; and
   a transition metal element substituted for the Mg and/or Al.

The second aspect of the present invention is a process for producing the novel catalyst for purifying exhaust gases, and comprises the steps of:
thermally treating a double-chained-structure type clay mineral including at least one element selected from the group consisting of magnesium and aluminum to modify the double-chained-structure type clay mineral for forming at least partially an amorphous structure in a modified clay mineral;
substituting a transition metal element for the Mg and/or Al of the amorphous structure at least partially for preparing a substituted clay mineral;
loading at least one co-catalyst selected from the group consisting of rare-earth elements, alkali metal elements, and alkaline-earth metal elements on the substituted clay mineral; and
loading at least one noble metal element on the substituted clay mineral with the co-catalyst loaded.

The third aspect of the present invention is another process for producing the novel catalyst for purifying exhaust gases, and comprises the steps of:
thermally treating a double-chained-structure type clay mineral including at least one element selected from the group consisting of magnesium and aluminum to modify the double-chained-structure type clay mineral for forming at least partially an amorphous structure in a modified clay mineral;
substituting a transition metal element for the Mg and Al of the amorphous structure at least partially for preparing a substituted amorphous clay mineral;
loading at least one noble metal element on the substituted amorphous clay mineral; and
loading at least one co-catalyst selected from the group consisting of rare-earth elements, alkali metal elements, and alkaline-earth metal elements on the substituted clay mineral with the noble metal element loaded.

The fourth aspect of the present invention is still another process for producing the novel catalyst for purifying exhaust gases, and comprises the steps of:
thermally treating a double-chained-structure type clay mineral including at least one element selected from the group consisting of magnesium and aluminum to modify the double-chained-structure type clay mineral for forming at least partially an amorphous structure in a modified clay mineral;
substituting a transition metal element for the Mg and/or Al of the amorphous structure at least partially for preparing a substituted clay mineral; and
loading at least one co-catalyst selected from the group consisting of rare-earth elements, alkali metal elements, and alkaline-earth metal elements, and at least one noble metal element on the substituted clay mineral.

According to the present invention, the number of OH groups on the surface of a double-chained-structure type clay mineral is reduced by replacing the Mg and/or Al of the clay mineral with transition metal, and furthermore at least one co-catalyst selected from the group consisting of rare-earth elements, alkali metal elements, and alkaline-earth metal elements is loaded together with at least one noble metal element. It is believed that the rare-earth elements, alkali metal elements, or alkaline-earth metal elements not only improve the adsorptive activity of the noble metal element to HC, but also degrade that to SO₂, because the rare-earth elements, alkali metal elements, or alkaline-earth metal elements vary the state of electrons in the noble metal element.

The novel catalyst for purifying exhaust gases according to the first aspect of the present invention can readily oxidize and decompose HC at low temperatures, and can inhibit the sulfates from being generated at elevated temperatures. Hence, when the present novel catalyst is applied to exhaust systems of diesel engines, not only it exhibits exhaust purifying performance equivalent to that of conventional catalysts, but also it can reduce the emission of "PM". Note that the term "HC" herein includes gaseous low-molecular-weight hydrocarbons, and liquid high-molecular-weight hydrocarbons.

Moreover, the production processes according to the second through fourth aspects of the present invention can produce the present novel catalyst for purifying exhaust gases easily and stably.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The double-chained-structure type clay mineral changes its structure from crystal to amorphous by the thermal treatment. Hence, in accordance with the second through fourth aspects of the present invention, the double-chained-structure-type clay mineral is turned into amorphous partially at least in the thermally treating step.

In the substituting step, the transition metal element is substituted for at least a part of the constituent elements Mg and/or Al of the amorphous double-chained-structure type clay mineral which has been turned into amorphous partially at least. In the amorphous double-chained-structure type clay mineral, the Mg-O bonds and/or Al-O bonds are weakened in a varied crystalline structure. Consequently, the constituent elements Mg and/or Al of the amorphous double-chained-structure type clay mineral are likely to be replaced by the transition metal element.

It is preferable to employ an ion-exchanging process in order to carry out the substituting step. For example, the amorphous double-chained-structure type clay mineral is dispersed in water to prepare a suspension. When preparing a suspension, it is preferable to prepare water in an amount of 10 times by weight or more with respect to a weight of the amorphous double-chained-structure type clay mineral. When water is prepared in an amount of less than 10 times by weight with respect to a weight of the double-chained-structure type amorphous clay mineral, the resulting suspension is unstable, and as a result the ion-exchange occurs locally. In addition, it is preferable to introduce salts of the substituent transition metal element into the suspension so as to cause the ion-exchange with ease.

The substituent transition metal element ions introduced by an ion-exchange process in the substituting step exist between the fiber-like micro-fine crystals or in the channels which can appropriately diffuse or absorb HC and CO. The term "channels" means the tunnels which exist among the fiber-like micro-fine crystals. The tunnels have a cross-sectional width of from 0.6 to 1 nm approximately, and run parallel to the extending direction of the thread-like micro-fine crystals. Thus, the transition metal element ions can exist in the channels in a highly dispersed manner without collapsing the structure of the channels.

Note that, in the present invention, the double-chained-structure type clay mineral is not a single large independent crystal, but an assembly of fine crystals. Accordingly, the double-chained-structure type clay mineral includes asymmetric surfaces where its crystalline structure breaks. Hydroxide groups are present on the asymmetric surfaces, and are apt to absorb metallic complexes like platinum compounds. The amorphous structure is a state in which an original crystalline structure collapses, and accordingly includes an increasing number of asymmetric surfaces. As a result, hydroxide groups exist on the asymmetric surfaces in an increasing number, and are spread widely in the entire double-chained-structure type clay mineral in a highly dispersed manner. Thus, the noble metal elements, loaded by way of the hydroxide groups, are put into such a highly dispersed state that they are less likely to agglomerate. Also note that amorphous double-chained-structure type clay mineral has a high BET specific surface area (e.g., 120 m²/g or more). Consequently, the amorphous double-chained-structure type clay mineral is superb in terms of gas- and liquid-absorbing ability. Hence, the novel catalyst for purifying exhaust gases according to the present invention exhibits a high oxidizing activity.

The transition metal element acts onto HC as a decomposing co-catalyst, the novel catalyst for purifying exhaust gases according to the present invention consequently exhibits a good oxidizing-and-decomposing activity with respect to HC at low temperatures.

In addition, the novel catalyst for purifying exhaust gases according to the present invention can not only purify HC by means of the oxidation reaction, but also purify NOₓ by means of reduction reactions, because at least one co-catalytic element selected from the group consisting of rare-earth elements, alkali metal elements, and alkaline-earth metal elements is loaded thereon.

As for the double-chained-structure type clay mineral including Mg and/or Al, it is possible to exemplify sepiolite, palygorskite, and attapulgite whose theoretical chemical formulas are as follows; namely:

sepiolite: Mg₈Si₁₂O₃₀(OH)₄·(OH₂)₄·8H₂O; and

palygorskite, and attapulgite: (Mg, Al)₅Si₈O₂₀(OH)₂·(OH₂)₄·4H₂O.

Note that the double-chained-structure type clay mineral can include the other elements as its constituent elements.

It is preferred that, in the thermally treating step, the heat treatment is carried out in a temperature range of from 400 to 800 °C. When the heat treatment is carried out at a temperature of less, than 400 °C, the double-chained-structure type clay mineral loses its crystallization water, and turns into amorphous. However, the resulting amorphous clay mineral is liable to absorb water, and accordingly easily restores the original crystalline structure by means of recrystallization. When the heat treatment is carried out at a temperature of more than 800 °C, the double-chained-structure type clay mineral unpreferably produces enstatite crystals which have much less susceptibility to the replacement of the constituent Mg and/or Al with the transition metal element. Hence, it is further preferable to carry out the heat treatment in a temperature range of from 600 to 700 °C which enables the double-chained-structure type clay mineral to turn into amorphous to a greater extent, and which makes Mg and/or Al more likely to be subjected to the ion-exchange with the transition metal element.

As for the substituent transition metal element, it is possible to exemplify iron (Fe), cobalt (Co), nickel (Ni), manganese (Mn), copper (Cu), and chromium (Cr). Among the specific substituent transition metal elements, Fe and Co exhibit a remarkable catalytic activity.

In the present invention, it is preferred that the transition metal element substitutes for at least a part of the constituent Mg and/or Al of the amorphous double-chained-structure type clay mineral in an amount of from 10 (not inclusive) to 80% (inclusive) by weight (i.e., 10% by weight < transition-metal-element substitution ≦ 80% by weight) with respect to a total amount of the constituent Mg and/or Al. When the transition metal element substitutes for the constituent Mg and/or Al in an amount of less than 10% by weight with respect to a total amount of the constituent Mg and/or Al, the amorphous double-chained-structure type clay mineral includes too much Mg and/or Al to inhibit SO₂ and SO₃ from being absorbed thereon. The thus absorbed SO₂ and SO₃ convert, for example, Mg, into sulfates. The resulting sulfates elute out of the amorphous double-chained-structure type clay mineral to change the support structures, thereby degrading the catalytic activities of the resulting catalyst for purifying exhaust gases. When the transition metal element substitutes for the constituent Mg and/or Al in an amount of more than 80% by weight with respect to a total amount of the constituent Mg and/or Al, a transition metal element oxide is likely to arise, and reacts unpreferably with SO₂ and SO₃ to adversely affect the catalytic activities of the resulting catalyst for purifying exhaust gases. It is especially preferred that the transition metal element substitutes for the constituent Mg and/or Al in an amount of from 30 to 60% by weight with respect to a total amount of the constituent Mg and/or Al.

As for the rare-earth elements, it is possible to exemplify lanthanum (La), cerium (Ce), praseodymium (Pr), neodymium (Nd), samarium (Sm), gadolinium (Gd), terbium (Tb), dysprosium (Dy), and ytterbium (Yb). As for the alkali metal elements, it is possible to exemplify lithium (Li), sodium (Na), potassium (K), rubidium (Rb), and cesium (Cs). As for the alkaline-earth metal elements, it is possible to exemplify magnesium (Mg), calcium (Ca), strontium (Sr), and barium (Ba). Among the specific co-catalytic elements, it is especially preferable to employ at least one co-catalytic element selected from the group consisting of Ce, Pr, Tb, and Dy. In the novel catalyst for purifying exhaust gases according to the present invention, one or more co-catalytic elements selected from the group consisting of the specific catalytic elements listed above are loaded thereon. When a plurality of the specific catalytic elements are loaded thereon, the total loading amount can preferably fall in a range of from 0.005 to 0.5 mol, further preferably from 0.01 to 0.4 mol, with respect to a unit volume (e.g., 1 L) of the novel catalyst. When the loading amount is less than 0.005 mol with respect to 1 L of the resulting catalyst, it is difficult for the resulting catalyst to inhibit the sulfates from being generated at elevated temperatures. When the loading amount is more than 0.5 mol with respect to 1 L of the resulting catalyst, the advantageous effects resulting from the co-catalytic elements saturate, and such a loading amount results in pushing up the manufacturing costs.

As for the noble metal element, it is possible to employ at least one element selected from the group consisting of platinum (Pt), palladium (Pd), rhodium (Rh), ruthenium (Ru), gold (Au), iridium (Ir), and silver (Ag). In addition, it is possible to employ alloys which include at least one element selected from the group consisting of the specific noble metal elements listed above. The loading amount of the noble metal element depends on the specific noble metal elements employed, but can preferably fall in a range of from 0.1 to 20 grams, further preferably from 0.5 to 10 grams, with respect to 1 L of the present novel catalyst for purifying exhaust gases. For example, when Pt is employed, the loading amount of Pt can preferably fall in a range of from 1 to 10 grams with respect to 1 L of the present novel catalyst. When the loading amount of the specific noble metal elements is less than 0.1 gram with respect to 1 L of the resulting catalyst, the resulting catalyst little exhibits a catalytic activity. When the loading amount of the specific noble metal elements is more than 20 grams with respect to 1 L of the resulting catalyst, the resulting catalyst exhibits saturated catalytic activities In addition, the resulting oxidizing catalyst shows deteriorated catalytic actions because the specific noble metal elements cluster coarsely thereon, and such a large loading amount of the specific noble metal elements pushes up the manufacturing costs.

As for the process for loading at least one co-catalytic element selected from the group consisting of rare-earth elements, alkali-metal elements, and alkaline-earth metal elements, and as for the process for loading at least one noble element selected from the specific noble metal elements, it is possible to employ an impregnation loading process. According to an impregnation loading process, a solution of a salt of these elements is impregnated into the transition-metal-element-substituted amorphous double-chained-structure type clay mineral, and the water content of the aqueous solution is dried. In certain applications, it is possible to use an ion-exchange loading process.

After the transition metal element substitutes for the constituent Mg and/or Al of the amorphous double-chained-structure type clay mineral, it is preferable, considering the exhaust purifying performance of the present novel catalyst for purifying exhaust gases, to first load at least one co-catalytic element selected from the group consisting of rare-earth elements, alkali metal elements, and alkaline-earth metal elements on the transition-metal-element-substituted amorphous double-chained-structure type clay mineral, and to subsequently load at least one noble metal element selected from the specific noble metal elements thereon. Note that, however, the loading order is not limited to the above. For instance, the noble metal element can be loaded thereon before the co-catalytic element is loaded thereon, or both of them can be loaded thereon simultaneously.

### First Preferred Embodiment

A sepiolite powder having a grain size of 100 mesh or less was put in a crucible made from alumina. The sepiolite was produced in Turkey. The crucible was placed in an electric furnace to thermally treat the sepiolite powder at 650 °C for 4.5 hours. An amorphous sepiolite powder was thus prepared.

The amorphous sepiolite powder was weighed out by 1 kg, and was mixed with ion-exchanged water by a home-use mixer for 10 minutes to disperse therein. Then, 606 grams of iron chloride was mixed with the dispersion to disperse therein. Thereafter, the resulting dispersion was further stirred by a disper for 30 minutes to fully replace the constituent Mg with Fe. After completing the substitution reaction, the dispersion was repeatedly suction-filtered to completely wash out the chloride ions, etc. Finally, the resulting filtered substance was dried at 110 °C, and was further calcinated at 500 °C for 1 hour to stabilize Fe therein. An Fe-substituted amorphous sepiolite powder was thus prepared.

The resulting Fe-substituted amorphous sepiolite powder was weighed out by 100 grams, and immersed in a neodymium nitrate aqueous solution including Nd per se in an amount of 0.05 mol. The mixture was stirred and heated on a heating stirrer in a temperature range of from 120 to 150 °C, thereby evaporating the excessive water content. The resulting residual substance was dried at 110 °C in a drier for 15 hours, thereby completely evaporating the water content. Finally, the resulting completely-dried substance was calcinated at 500 °C in an electric furnace in air for 1 hour.

Moreover, the resulting Nd-loaded-and-Fe-substituted amorphous sepiolite powder was immersed in a dinitrodiammine platinum nitrate aqueous solution including Pt per se in an amount of 2 grams. The mixture was stirred and heated on a heating stirrer in a temperature range of from 120 to 150 °C, thereby evaporating the excessive water content. The resulting residual substance was dried at 110 °C in a drier for 15 hours, thereby completely evaporating the water content. Finally, the resulting completely-dried substance was calcinated at 350 °C in an electric furnace in air for 3 hours. A catalyst for purifying exhaust gases of the First Preferred Embodiment was thus prepared.

### Examination and Evaluation

The catalyst for purifying exhaust gases of the First Preferred Embodiment was evaluated by the following examinations. The catalyst was pressed by a pressure of 150 kgf/mm², and was thereafter pulverized by using a knife. The pulverized catalyst was classified into fractions having a grain size of from 6 to 10 mesh. The thus pulverized-and-classified catalyst was measured out by 7 c.c., and was charged in a quarts tube having an inside diameter of 15 mm. The quarts tube charged with the catalyst was placed in a fixed-bed gas-fluidization apparatus. Then, the quarts tube was exposed to a model gas having a composition as recited in Table 1 below. The catalyst was examined for the temperature at which it converted 50% HC, and for the temperature at which it converted SO₂ into sulfates by 20%. The results of this examination are summarized in Table 2.

**TABLE 1**

| Gas Component | HC (ppmC) | CO (ppm) | CO₂ (%) | O₂ (%) | NO (ppm) | SO₂ (ppm) | H₂O (%) | N₂ |
|---|---|---|---|---|---|---|---|---|
| Content | 600 | 1,000 | 5 | 10 | 300 | 50 | 10 | Balance |

### Second through Fourth Preferred Embodiments

Except that a praseodymium nitrate aqueous solution was used instead of the neodymium nitrate aqueous solution, and that the concentration of the praseodymium nitrate aqueous solution was varied diversely, catalysts for purging exhaust gases of the Second through Fourth Preferred Embodiments were prepared in the same manner as the First Preferred Embodiment. The resulting catalysts were examined for the 50%-HC conversion temperature and the 20%-sulfates conversion temperature in the same manner as the First Preferred Embodiment. The results of the examinations are also summarized in Table 2.

### Fifth Preferred Embodiment

Except that a cerium nitrate aqueous solution including Ce per se in a amount of 0.05 mol was used instead of the neodymium nitrate aqueous solution, a catalyst for purifying exhaust gases of the Fifth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Sixth Preferred Embodiment

Except that a lanthanum nitrate aqueous solution including La per se in an amount of 0.05 mol was used instead of the neodymium nitrate aqueous solution, a catalyst for purifying exhaust gases of the Sixth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Seventh Preferred Embodiment

Except that a gadolinium nitrate aqueous solution including Gd per se in an amount of 0.05 mol was used instead of the neodymium nitrate aqueous solution, a catalyst for purifying exhaust gases of the Seventh Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Eighth Preferred Embodiment

Except that a terbium nitrate aqueous solution including Tb per se in a amount of 0.05 mol was used instead of the neodymium nitrate aqueous solution, a catalyst for purging exhaust gases of the Eighth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Ninth Preferred Embodiment

Except that a dysprosium nitrate aqueous solution including Dy per se in an amount of 0.05 mol was used instead of the neodymium nitrate aqueous solution, a catalyst for purifying exhaust gases of the Ninth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Tenth through Twelfth Preferred Embodiments

Except that a potassium nitrate aqueous solution was used instead of the neodymium nitrate aqueous solution, and that the concentration of the potassium nitrate aqueous solution was varied diversely, catalysts for purifying exhaust gases of the Tenth through Twelfth Preferred Embodiments were prepared in the same manner as the First Preferred Embodiment. The resulting catalysts were examined for the 50%-HC conversion temperature and the 20%-sulfates conversion temperature in the same manner as the First Preferred Embodiment. The results of the examinations are also summarized in Table 2.

### Thirteenth Preferred Embodiment

Except that a cesium nitrate aqueous solution including Cs per se in an amount of 0.05 mol was used instead of the neodymium nitrate aqueous solution, a catalyst for purifying exhaust gases of the Thirteenth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Fourteenth through Sixteenth Preferred Embodiments

Except that a calcium nitrate aqueous solution was used instead of the neodymium nitrate aqueous solution, and that the concentration of the calcium nitrate aqueous solution was varied diversely, catalysts for purifying exhaust gases of the Fourteenth through Sixteenth Preferred Embodiments were prepared in the same manner as the First Preferred Embodiment. The resulting catalysts were examined for the 50%-HC conversion temperature and the 20%-sulfates conversion temperature in the same manner as the First Preferred Embodiment. The results of the examinations are also summarized in Table 2.

### Seventeenth Preferred Embodiment

Except that a barium acetate aqueous solution including Ba per se in an amount of 0.05 mol was used instead of the neodymium nitrate aqueous solution, a catalyst for purifying exhaust gases of the Seventeenth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Eighteenth Preferred Embodiment

Except that cobalt chloride was used instead of iron chloride in the transition-metal-element substitution step, a catalyst for purifying exhaust gases of the Eighteenth Preferred Embodiment was prepared in the same manner as the First Preferred Embodiment. Note that Co substituted for the constituent Mg in an amount of about 50% by weight with respect to a total amount of the constituent Mg in the same manner as the Fe substitution in the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Nineteenth Preferred Embodiment

Except that not only a praseodymium nitrate aqueous solution including Pr per se in an amount of 0.05 mol, but also a potassium sulfate aqueous solution including K per se in an amount of 0.01 mol was used instead of the neodymium nitrate aqueous solution, a catalyst for purifying exhaust gases of the Nineteenth Preferred Embodiment was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Comparative Example No. 1

Except that no neodymium aqueous solution was used, a catalyst for purifying exhaust gases of Comparative Example No. 1 was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

### Comparative Example No. 2

Except that cobalt chloride was used instead of iron chloride in the transition-metal-element substitution step, and that no neodymium aqueous solution was used, a catalyst for purifying exhaust gases of Comparative Example No. 2 was prepared in the same manner as the First Preferred Embodiment. The resulting catalyst was examined for the 50%-HC conversion temperature and the 20%-sulfates conversion temperature in the same manner as the First Preferred Embodiment. The results of the examinations are also summarized in Table 2.

**TABLE 2**

| Identification | Substituent Transition Metal Element | Co-catalytic Element (mol) | 50%-HC Conversion Temp. (°C) | 20%-Sulfates Conversion Temp. (°C) |
|---|---|---|---|---|
| 1st Pref. Embodiment | Fe | Nd (0.05) | 258 | 344 |
| 2nd Pref. Embodiment | Fe | Pr (0.05) | 253 | 374 |
| 3rd Pref. Embodiment | Fe | Pr (0.005) | 261 | 330 |
| 4th Pref. Embodiment | Fe | Pr (0.5) | 262 | 337 |
| 5th Pref. Embodiment | Fe | Ce (0.05) | 263 | 337 |
| 6th Pref. Embodiment | Fe | La (0.05) | 261 | 331 |
| 7th Pref. Embodiment | Fe | Gd (0.05) | 264 | 340 |
| 8th Pref. Embodiment | Fe | Tb (0.05) | 254 | 365 |
| 9th Pref. Embodiment | Fe | Dy (0.05) | 264 | 336 |
| 10th Pref. Embodiment | Fe | K (0.05) | 279 | 352 |
| 11th Pref. Embodiment | Fe | K (0.005) | 270 | 328 |
| 12th Pref. Embodiment | Fe | K (0.5) | 292 | 367 |
| 13th Pref. Embodiment | Fe | Cs (0.05) | 285 | 360 |
| 14th Pref. Embodiment | Fe | Ca (0.05) | 282 | 353 |
| 15th Pref. Embodiment | Fe | Ca (0.005) | 274 | 341 |
| 16th Pref. Embodiment | Fe | Ca (0.5) | 295 | 372 |
| 17th Pref. Embodiment | Fe | Ba (0.05) | 291 | 360 |
| 18th Pref. Embodiment | Co | Pr (0.05) | 267 | 358 |
| 19th Pref. Embodiment | Fe | Pr (0.05) | 269 | 401 |
| | | K (0.01) | | |
| Comp. Ex. No. 1 | Fe | none | 264 | 321 |
| Comp. Ex. No. 2 | Co | none | 275 | 332 |

It is understood from Table 2 that the catalysts for purifying exhaust gases of the First through Ninth Preferred Embodiments, and of the Nineteenth Preferred Embodiment exhibited a lower 50%-HC conversion temperature than those of comparative examples. Thus, they had an outstanding oxidizing activity against HC. Concerning the 20%-sulfates conversion temperature, they exhibited a relatively high temperature. Hence, they apparently inhibited sulfates from being generated.

Although the catalysts for purifying exhaust gases of the Tenth through Seventeenth Preferred Embodiments exhibited a slightly increased 50% HC-conversion temperature, they exhibited a satisfactorily high 20%-sulfates conversion temperature. Therefore, they remarkably inhibited sulfates from being generated.

In particular, the exhaust emitted from diesel engines has a low temperature falling in a range of from 200 to 250 °C. When a catalyst for purifying exhaust gases exhibits a 20%-sulfates conversion temperature which is above the range, or which is elevated slightly above the upper limit, it can be regarded to effectively inhibit sulfates from being generated. Hence, according to the results recited in Table 2, it is appreciated that the First through Nineteenth Preferred Embodiments could fully inhibit sulfates from being generated.

Having now fully described the present invention, it will be apparent to one of ordinary skill in the art that many changes and modifications can be made thereto without departing from the spirit or scope of the present invention as set forth herein including the appended claims.

## Claims

1. An exhaust catalyst for purifying exhaust gases comprising:
a carrier of a modified clay mineral;
a catalyst of a noble metal element loaded on said carrier; and
a co-catalyst loaded on said carrier together with said catalyst, said co-catalyst being at least one element selected from the group consisting of rare-earth elements, alkali metal elements, and alkaline-earth metal elements;
said modified clay mineral comprising:
a double-chained-structure type clay mineral comprising Mg and/or Al;
an amorphous structure transformed from at least a part of said double-chained-structure type clay mineral; and
a transition metal element substituted for said Mg and/or Al.

2. The exhaust catalyst according to Claim 1, wherein the double-chained-structure type clay mineral is at least one selected from the group consisting of sepiolite, palygorskite, and attapulgite.

3. The exhaust catalyst according to Claim 1, wherein said transition metal element is at least one element selected from the group consisting of iron (Fe), cobalt (Co), nickel (Ni), manganese (Mn), copper (Cu), and chromium (Cr).

4. The exhaust catalyst according to Claim 3, wherein said transition metal element is at least one element selected from the group consisting of Fe, and Co.

5. The exhaust catalyst according to Claim 1, wherein the rare-earth elements are at least one element selected from the group consisting of lanthanum (La), cerium (Ce), praseodymium (Pr), neodymium (Nd), samarium (Sm), gadolinium (Gd), terbium (Tb), dysprosium (Dy), and ytterbium (Yb).

6. The exhaust catalyst according to Claim 1, wherein the alkali metal elements are at least one element selected from the group consisting of lithium (Li), sodium (Na), potassium (K), rubidium (Rb), and cesium (Cs).

7. The exhaust catalyst according to Claim 1, wherein the alkaline-earth metal elements are at least one element selected from the group consisting of magnesium (Mg), calcium (Ca), strontium (Sr), and barium (Ba).

8. The exhaust catalyst according to Claim 1, wherein said co-catalyst is at least one element selected from the group consisting of Ce, Pr, Tb, and Dy.

9. The exhaust catalyst according to Claim 1, wherein said co-catalyst is loaded in an amount of from 0.005 to 0.5 mol with respect to 1 L of said exhaust catalyst.

10. The exhaust catalyst according to any one of Claims 1, 5, 6, 7 and 8, wherein said noble metal element is at least one element selected from the group consisting of platinum (Pt), palladium (Pd), rhodium (Rh), ruthenium (Ru), gold (Au), iridium (Ir), and silver (Ag).

11. The exhaust catalyst according to Claim 10, wherein said noble metal element is Pt.

12. The exhaust catalyst according to any one Claims 1, 10 and 11, wherein said noble metal element is loaded in an amount of from 0.1 to 20 grams with respect to 1 L of said exhaust catalyst.

13. A process for producing an exhaust catalyst, the process comprising the steps of:
thermally treating a double-chained-structure type clay mineral including at least one element selected from the group consisting of magnesium and aluminum to modify the double-chained-structure type clay mineral for forming at least partially an amorphous structure in a modified clay mineral;
substituting a transition metal element for the Mg and/or Al of the amorphous structure at least partially for preparing a substituted clay mineral;
loading at least one co-catalyst selected from the group consisting of rare-earth elements, alkali metal elements, and alkaline-earth metal elements on the substituted clay mineral; and
loading at least one noble metal element on the substituted clay mineral with the co-catalyst loaded.

14. The process according to Claim 13, wherein the loading step of a co-catalyst, and the loading step of a noble metal element are carried out simultaneously.

15. The process according to Claim 13 or 14, wherein, in said thermally treating step, the double-chained-structure type clay mineral is heated in a temperature range of from 400 to 800 °C.

16. The process according to Claim 13 or 14, wherein, in said thermally treating step, the double-chained-structure type clay mineral is at least one selected from the group consisting of sepiolite, palygorskite, and attapulgite.

17. The process according to Claim 13 or 14, wherein said substituting step is carried out by an ion-exchange process.

18. The process according to Claim 13 or 14, wherein, in said substituting step, the transition metal element is at least one element selected from the group consisting of iron (Fe), cobait (Co), nickel (Ni), manganese (Mn), copper (Cu), and chromium (Cr).

19. The process according to Claim 18, wherein, in said substituting step, the transition metal element is at least one element selected from the group consisting of Fe, and Co.

20. The process according to Claim 13 or 14, wherein, in said co-catalyst loading step, the rare-earth elements are at least one element selected from the group consisting of lanthanum (La), cerium (Ce), praseodymium (Pr), neodymium (Nd), samarium (Sm), gadolinium (Gd), terbium (Tb), dysprosium (Dy), and ytterbium (Yb).

21. The exhaust catalyst according to Claim 13 or 14, wherein, in said co-catalyst loading step, the alkali metal elements are at least one element selected from the group consisting of lithium (Li), sodium (Na), potassium (K), rubidium (Rb), and cesium (Cs).

22. The process according to Claim 13 or 14, wherein, in said co-catalyst loading step, the alkaline-earth metal elements are at least one element selected from the group consisting of magnesium (Mg), calcium (Ca), strontium (Sr), and barium (Ba).

23. The process according to Claim 13 or 14, wherein, in said co-catalyst loading step, the co-catalyst is at least one element selected from the group consisting of Ce, Pr, Tb, and Dy.

24. The process according to Claim 13 or 14, wherein, in said co-catalyst loading step, the co-catalytic element is loaded an amount of from 0.005 to 0.5 mol with respect to 1 L of said exhaust catalyst.

25. The process according to Claim 13 or 14, wherein, in said noble metal element loading step, the noble metal element is at least one element selected from the group consisting of platinum (Pt), palladium (Pd), rhodium (Rb), ruthenium (Ru), gold (Au), iridium (Ir), and silver (Ag).

26. The process according to Claim 25, wherein, in said noble metal element loading step, the noble metal element is Pt.

27. The process according to Claim 13 or 14, wherein, in said noble metal element loading process, the noble metal element is loaded in an amount of from 0.1 to 20 grams with respect to 1 L of said exhaust catalyst.
